# EUROPEAN PATENT APPLICATION

(11) **EP 3 466 762 A1**
(43) Date of publication of application: **10.04.2019**
(21) Application number: 17194913.4
(22) Date of filing: 05.10.2017
(51) Int. Cl.: B60R 1/00, G06F 3/01

(54) **A MONITORING SYSTEM AND METHOD FOR DISPLAYING ONE OR MORE IMAGE VIEWS TO A USER OF A VEHICLE**

(71) Applicant: Ningbo Geely Automobile Research & Development Co. Ltd., Hangzhou Bay New District Ningbo 315336 (CN)
(72) Inventor: WITTE, Markus, 423 61 Torslanda (SE)
(74) Representative: Zacco Sweden AB

(57) **Abstract**

A method and monitoring system for displaying image views on a display unit (200) to a user of a vehicle, the method comprising: (S1) detecting a first position of the user (Upos1) in relation to a position of a display unit (200); (S2) determining, based on the first position of the user (Upos1) in relation to the position of the display unit (200), a first image view (1imv); (S3) displaying the first image view (1imv) on the display unit (200); (S4) detecting a second position of the user (Upos2) in relation to the display unit (200) that is different from the first position of the user (Upos1); (S5) determining, based on the second position of the user (Upos2) in relation to the position of the display unit (200), a second image view (2imv), and (S6) displaying the second image view (2imv) on the display unit (200).

## Description

### TECHNICAL FIELD

The disclosure pertains to the field of vehicle rear view mirrors and safe driving of vehicles.

### BACKGROUND

A user of a vehicle, in particular the driver, use mirrors to see what is behind the vehicle and what is on the sides of the vehicle. Keeping an eye in the mirrors on the traffic behind the vehicle is almost as necessary as keeping an eye on the traffic ahead. Rear view mirrors are also of particular use when e.g. backing up a vehicle. Vehicle mirrors can be of different kind, and have different view angles for the user that is looking into the mirror. Rear view mirrors can be adjusted manually e.g. by the hand of a driver of a vehicle. Rear view mirrors can also be adjusted with help from electrical motors and the user of the vehicle can e.g. turn and tilt a mirror until it is adjusted to a good viewing angle. It is quite common that one vehicle mirror is combined with at least one other mirror in order to cover as may angles for a good rear view as possible.

Backup cameras are also commonly used in order to provide a user of a vehicle with a camera view, e.g. with a view of the surroundings that is behind the vehicle. A backup camera display can be placed at a place in the vehicle so that the user of a vehicle can look at the display when e.g. backing up the vehicle.

### SUMMARY

Today there is a demand for better view angles and better ways to enhance the rear view for a driver of a vehicle. Traditional mirrors have been combined with rear view video cameras, so called backup cameras, in order to help a user of a vehicle to see as much as possible that is behind the vehicle on a display when e.g. backing up or parking the vehicle. The image information provided by the backup camera to the display viewable by the driver of the vehicle is dependent on the view angle, and placement, of the backup camera that is providing with the image information. The backup camera can in some examples be controlled by the user of the vehicle, e.g. for zooming in and out.

The traditional of mirrors of vehicles remain, and will continue to exist. One of the reasons is that the view angles, disclosing different information to the user of the vehicle, can easily be controlled by movement of the head of the user of the vehicle. Still there are blind spots, dead angles that can sometimes be difficult for the user of the vehicle to detect.

The combination of having both a rear view mirror and a backup camera is not always that intuitive for a driver. Sometimes when a driver is backing up a vehicle it is difficult to both keep an eye on the rear view mirror and on the backup camera display and they provide different information that may be difficult to put into one context.

An object of the present disclosure is to provide a monitoring system and method which seek to mitigate, alleviate, or eliminate one or more of the above-identified deficiencies in the art and disadvantages singly or in any combination.

The disclosure proposes a monitoring system for displaying one or more image views to a user of a vehicle. The monitoring system comprises a display unit configured to display the one or more image views to the user, and a user detection unit configured to detect a position of the user. The monitoring system further comprises a camera unit configured to provide the display unit with the one or more image views and a processing circuitry connected to the display unit, the user detection unit and the camera unit. The processing circuitry is configured to cause the monitoring system to detect, by the user detection unit, a first position of the user in relation to the position of the display unit and determine, based on the first position of the user in relation to the position of the display unit, a first image view. The processing circuitry is further configured to cause the monitoring system to display the first image view on the display unit, and detect, by the user detection unit, a second position of the user in relation to the display unit that is different from the first position of the user. The processing circuitry is further configured to cause the monitoring system to determine, based on the second position of the user in relation to the position of the display unit, a second image view, and display the second image view on the display unit. An advantage with the monitoring system is that different image views can be provided to the user of the vehicle when the user is moving from one position to another position. This is a very intuitive way for the user to change image view of the rear view in order to get better viewing angles and see more information that can be provided by the camera unit compare to a traditional rear view mirror.

According to an aspect the processing circuitry is further configured to cause the monitoring system to continuously detect, by the user detection unit, further positions of the user in relation to the position of the display unit and determine, based on the further positions of the user in relation to the position of the display unit, further image views. The processing circuitry is then further configured to cause the monitoring system to display the further image views in the display unit. In other words, plural image views can be provided to the user dependent on how the user is moving in relation to the display unit.

According to an aspect the camera unit of the monitoring system is arranged to film a surrounding of the vehicle and determine the image views from the film. This means that the film comprises information of the surrounding and with this information multiple different image views can be provided to the user.

According to an aspect the monitoring system is arranged to film the surrounding in a rear view of the vehicle. This will help the user to see blind spots and dead angles that are normally not possible to see in a traditional rear view mirror, and hence provide with a better and more secure viewing of the rear view of the vehicle.

According to an aspect the processing circuitry is configured to cause the monitoring system to continuously detect the position of the user in relation to the position of the display unit and correspondingly continuously change between the image views. In other words, the different image views can be provided continuously to the user of the vehicle dependent on the position of the user in relation to the display unit.

According to an aspect the image views are determined as to correspond to a view in a mirror to the user when looking at the display unit and moving from the first position of the user to the second position of the user. This means that it is very intuitive and easy for the user of the vehicle to control what information to be provided in the display unit since the display of image views corresponds to viewing objects in an ordinary mirror.

According to an aspect the position of the user is defined by the position of the user's head. The movement of the head is hence used for determining the image views to be displayed via de display unit.

According to an aspect the position of the user is defined by determining three dimensional coordinates of the position of the user in relation to the position of the display unit. Hence, e.g. the movement of the user's head can be determined by calculating a relative movement from one three dimensional coordinate to another three dimensional coordinate.

According to an aspect the image view on the display unit is dependent on the three dimensional coordinates of the position of the user. This means that the image view can be determined by using the three dimensional coordinates as input data to the monitoring system.

According to an aspect the display unit comprise a mirror display. The use of a mirror display has the advantage that when the display unit can be turned off and the user can then see an ordinary mirror view on the same surface as the display unit.

According to an aspect the image view is an image from a video stream of plural images. In other words, plural images, e.g. a number of images per second, is continuously streamed and the experience for the user is the same natural motion as same when looking in an ordinary mirror.

According to an aspect the image view is a part of an image generated by the camera unit. The camera unit can hence provide with image data that is e.g. wide angle view, but each image view is one part of the whole image generated by the camera unit.

According to an aspect the processing circuitry is configured to alter the pan and/or the zoom of the image view dependent on the position of the user in relation to the position of the display unit. This means that the user can e.g. control zoom by moving the head more close to the display unit.

According to an aspect the user detection unit comprises at least one of a head or face detection sensor; an eye tracking sensor; a camera sensor; an infra-red sensor; a radar sensor; and a laser sensor. This means that plural detection sensors can be used in order to detect a position of the user in relation to the position of the display unit.

The disclosure further proposes a method for displaying image views on a display unit to a user of a vehicle. The method comprising the steps of detecting a first position of the user in relation to a position of a display unit, determining, based on the first position of the user in relation to the position of the display unit, a first image view and displaying the first image view on the display unit. The method further comprising the steps of detecting a second position of the user in relation to the display unit that is different from the first position of the user, determining, based on the second position of the user in relation to the position of the display unit, a second image view, and displaying the second image view on the display unit. An advantage with the monitoring system is that different image views can be provided to the user of the vehicle when the user is moving from one position to another position. This is a very intuitive way for the user to change image view of the rear view in order to get better viewing angles and see more information that can be provided by the camera unit compare to a traditional rear view mirror.

According to an aspect the method further comprising: detecting further positions of the user in relation to the position of the display unit, determining, based on the further positions of the user in relation to the position of the display unit, further image, and displaying further image views in the display unit. In other words, the different image views can be provided continuously to the user of the vehicle dependent on the position of the user in relation to the display unit.

According to an aspect the method further comprising filming a surrounding of the vehicle and determining the image views from the film. This means that the film comprises information of the surrounding and with this information multiple different image views can be provided to the user.

According to an aspect the method further comprising filming the surrounding in a rear view of the vehicle. This means that the film comprises information of the surrounding and with this information multiple different image views can be provided to the user.

According to an aspect the method further comprising continuously detecting the position of the user in relation to the position of the display unit and correspondingly continuously changing between the image views. In other words, the different image views can be provided continuously to the user of the vehicle dependent on the position of the user in relation to the display unit.

According to an aspect the image views are determined as to correspond to a view in a mirror to the user when looking at the display unit and moving from the first position of the user to the second position of the user. This means that it is very intuitive and easy for the user of the vehicle to control what information to be provided in the display unit since the display of image views corresponds to viewing objects in an ordinary mirror.

According to an aspect the position of the user is defined by the position of the user's head. The movement of the head is hence used for determining the image views to be displayed via de display unit.

According to an aspect the processing circuitry is configured to alter the pan and/or zoom of the image view dependent on the position of the user in relation to the position of the display unit. This means that the user can e.g. control zoom by moving the head more close to the display unit.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates a monitoring system for implementing the proposed method.
Figure 2a illustrates a mirror view according to prior art.
Figure 2b illustrates an exemplary image view of a wide angle view of a backup camera according to prior art.
Figure 2c illustrates an exemplary image view of a narrow angle view of a backup camera according to prior art.
Figure 3a, 3b and 3c illustrates different positions of a user in relation to the display unit according to an aspect of the disclosure.
Figure 4a illustrates an exemplary image view generated by the camera unit according to an aspect of the disclosure.
Figure 4b illustrates an exemplary first image view according to an aspect of the disclosure.
Figure 4c illustrates an exemplary second image view according to an aspect of the disclosure.
Figure 5 illustrates a flow chart of the method steps according to some aspects of the disclosure.

### DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

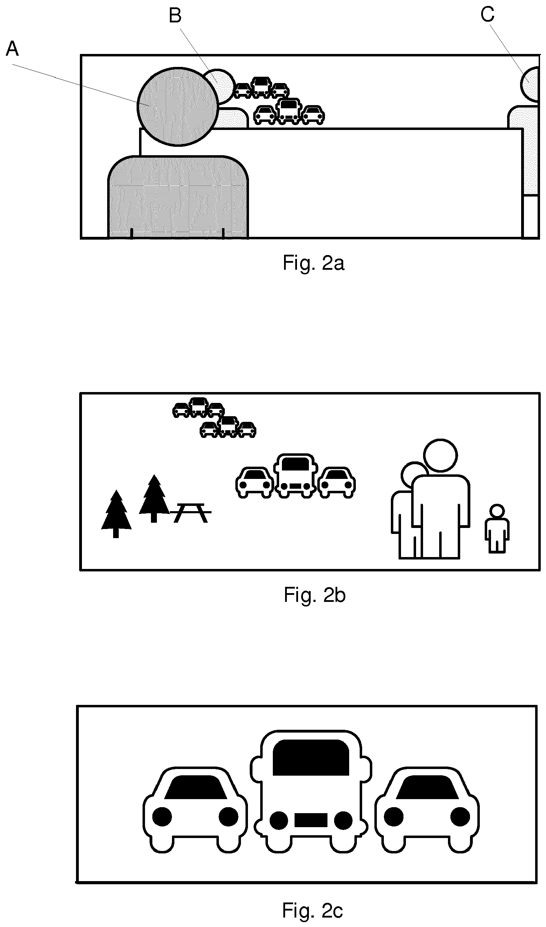

Today there is a demand for better view angles and better ways to enhance the rear view for a driver of a vehicle. A traditional rear view mirror typically provides a view as illustrated in Figure 2a. Traditional mirrors have therefore been combined with the use of rear view video cameras, or backup cameras, in order to help a user of a vehicle to see as much as possible that is behind the vehicle on a display when e.g. backing up the vehicle.

The image information provided on the display of a backup camera system is dependent on the view angle and the placement of the backup camera that is providing with the image information. The figure 2b illustrates an exemplary image view of a wide angle view of a backup camera according to prior art. The backup camera provides with a lot of information that, due to the wide angle, can sometimes be very difficult to see since all information is in one wide angle view. In particular objects that are far from the camera can almost disappear. Figure 2c illustrates an exemplary image view of a narrow angle view of a backup camera according to prior art. In this example, a lot of objects that are behind the vehicle is not visible, but just the part that is zoomed in upon, in this example the traffic behind the vehicle.

The traditional of mirrors of vehicles remain, and will continue to exist. One of the reasons is that the view angles, disclosing different information to the user of the vehicle, can easily be controlled by movement of the head of the user of the vehicle. But, still there are blind spots, dead angles that can sometimes be difficult for the user of the vehicle to detect. The combination with backup cameras is not always that intuitive for the driver. When a driver is backing up a vehicle it can be difficult to both keep an eye on the rear view mirror and on the backup camera display and in particular difficult put all the information into one context.

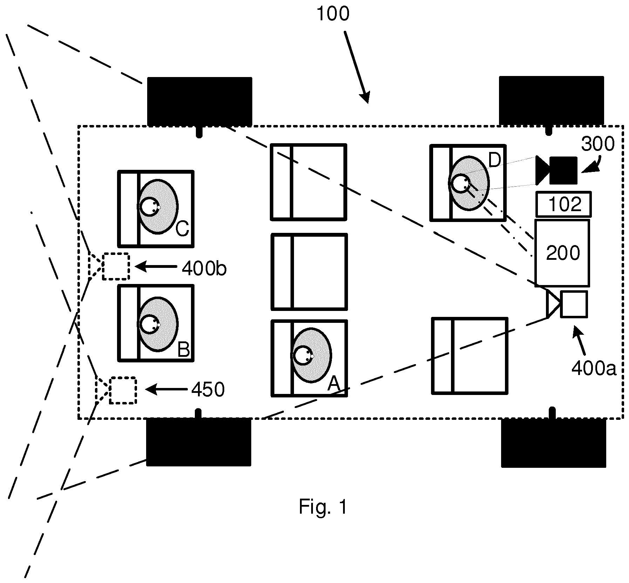

The inventor has identified that there is a need for an intuitive way to monitor the rear view of a vehicle. The disclosure proposes a monitoring system 100 for displaying one or more image views to a user of a vehicle. A user of a vehicle can be a driver, operator, pilot, officer, steersman or any other person that is operating the vehicle or for any other reason needs to see the surroundings of the vehicle. The monitoring system 100 can be used by anyone in the vehicle. Figure 1 illustrates a monitoring system according to an aspect of the disclosure. The monitoring system 100 comprise a display unit 200 configured to display the one or more image views to the user. The display unit 200 can be any display device such as dedicated display unit, a dashboard display, a display of a portable device such as a smartphone or a tablet, a mirror display such as a rear view or side mirror display, a vehicle backup camera display etc.

The monitoring system further 100 comprise a user detection unit 300. The user detection unit 300 can be placed anywhere in the vehicle and can also be used for other purposes, such as to detect if the driver is about to fall asleep or for detecting if the driver is paying attention to the driving or doing anything else etc. According an aspect the user detection unit is placed on or near the display unit 200. According to an aspect the user detection unit 300 comprises at least one of a head or face detection sensor; an eye tracking sensor; a camera sensor; an infra-red sensor; a radar sensor; and a laser sensor. This means that plural detection sensors can be used in order to detect a position of the user in relation to the position of the display unit 200. The user detection unit 300 is configured to detect a position of the user.

The monitoring system 100 further comprise a camera unit 400a, 400b. The camera unit 400a, 400b is according to an aspect a dedicated camera unit 400a that is mounted adjacent to the display unit 200. According to an aspect the monitoring system 100 comprise plural camera units 400a, 400b. The camera unit 400a, 400b can be placed so that the camera unit 400a, 400b capture an image view of both passengers in the vehicle and surroundings of the vehicle. For example in Fig. 1 the camera unit 400a is positioned to capture an image view of one or more passengers inside the vehicle and the surroundings behind the vehicle. For example as illustrated in Fig. 1, the camera unit 400b is positioned at the back of the vehicle to provide a wide angle view of the surroundings behind the vehicle.

According to an aspect the camera unit 400a, 400b is a wireless camera unit that is wirelessly connected to the monitoring system 100. Hence the wireless camera unit can easily be positioned without need for wires, but also the wireless camera unit can be a separate device 450 with a camera that can operate with the monitoring system 100. The monitoring system 100 may be configured to connect to the wireless camera unit 450 that is an auxiliary wireless electronic device that can connect wirelessly to the monitoring system 100. According to an aspect the wireless camera unit 450 is a camera unit that is located on the back of e.g. a trailer that the vehicle is towing. The wireless camera unit 450 may be connected to the monitoring system 100 using a communication network. In one example the communication network is a standardized wireless local area network such as a Wireless Local Area Network, WLAN, Bluetooth™, ZigBee, Ultra-Wideband, Near Field Communication, NFC, Radio Frequency Identification, RFID, or similar network. In one example the communication network is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. The communication network can also be a combination of both a local area network and a wide area network. The communication network can also be a wired network. According to some aspects of the disclosure the communication network is defined by common Internet Protocols.

According to an aspect the camera unit 400a, 400b is a rear view camera that is generating images of the rear view of the vehicle. According to an aspect the camera unit 400a, 400b is placed inside the vehicle. According to an aspect the camera unit 400a, 400b is configured to provide the display unit 200 with the one or more image views.

The monitoring system 100 further comprise a processing circuitry 102. The processing circuitry 102 can be a Central Processing Unit, CPU, or any processing unit carrying out instructions of a computer program or operating system. The processing circuitry 102 is connected to the display unit 200, the user detection unit 300 and the camera unit 400a, 400b.

The processing circuitry 102 is configured to cause the monitoring system 100 to detect, by the user detection unit 300, a first position of the user Uposlin relation to the position of the display unit 200 and determine, based on the first position of the user Upos1 in relation to the position of the display unit 200, a first image view 1imv.

The processing circuitry 102 is further configured to cause the monitoring system 100 to display the first image view 1imv on the display unit 200, and detect, by the user detection unit 300, a second position of the user Upos2 in relation to the display unit 200 that is different from the first position of the user Upos1. The processing circuitry 102 is further configured to cause the monitoring system 100 to determine, based on the second position of the user Upos2 in relation to the position of the display unit 200, a second image view 2imv, and display the second image view 2imv on the display unit 200. An advantage with the monitoring system is that different image views can be provided to the user of the vehicle when the user is moving from one position to another position. This is a very intuitive way for the user to change image view of the rear view in order to get better viewing angles and see more information that can be provided by the camera unit compare to a traditional rear view mirror.

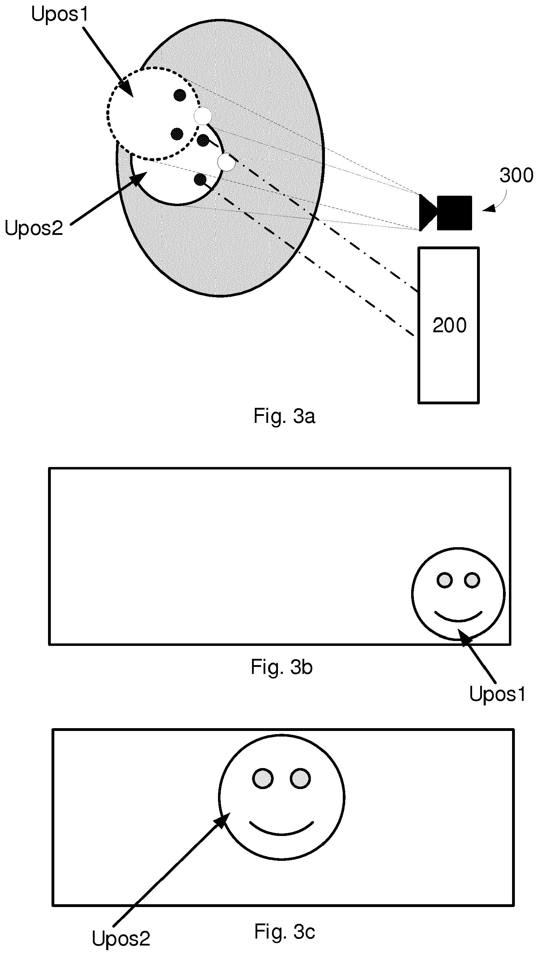

Figure 3a, 3b and 3c illustrates different positions Upos1, Upos2 of the user in relation to the display unit 200 according to an aspect of the disclosure. The a movement from one position of the user to another position of the user can be described as a movement in a three dimensional (x, y, z) space from one position to another position.

According to an aspect the position of the user Upos1; Upos2; Upos(n); Upos(n+1); Upos(n+2);.... is defined by determining three dimensional coordinates x1, y1, z1; x2,y2,z2; x(n), y(n), z(n); x(n+1), y(n+1), z(n+1); x(n+2), y(n+2), z(n+2);.... of the position of the user in relation to the position of the display unit 200. Hence, e.g. the movement of the user's head can be determined by calculating a relative movement from one three dimensional coordinate to another three dimensional coordinate.

According to an aspect the image view 1imv;2imv; (n)imv; (n+1)imv; (n+2)imv on the display unit 200 is dependent on the three dimensional coordinates x1, y1, z1; x2,y2,z2; x(n), y(n), z(n); x(n+1), y(n+1), z(n+1); x(n+2), y(n+2), z(n+2);.... of the position of the user. This means that the image view can be determined by using the three dimensional coordinates as input data to the monitoring system 100.

According to an aspect the displayed image view 1imv;2imv; (n)imv; (n+1)imv; (n+2)imv that is displayed on the display unit 200 is hence determined dependent on the movement of the user in relation to the display unit 200. According to an aspect the position of the user is defined by the position of the user's head. The movement of the head is hence used for determining the image views to be displayed via de display unit 200.

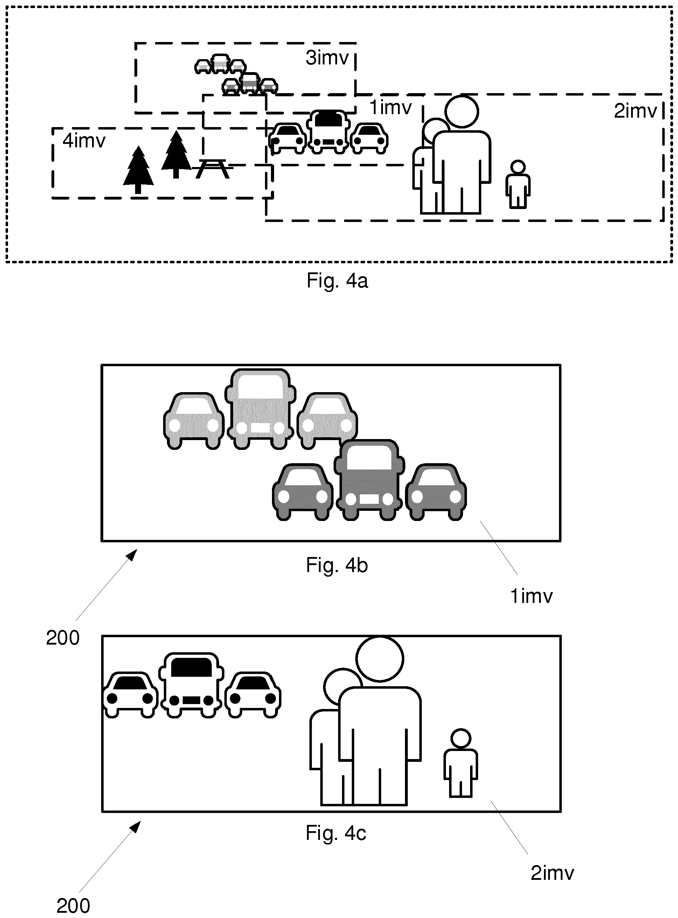

According to an aspect the image view 1imv;2imv; (n)imv; (n+1)imv; (n+2)imv is a part of an image generated by the camera unit 400a, 400b. The camera unit 400a, 400b can hence provide the display unit 200 with image data that is e.g. wide angle view, but each image view 1imv;2imv; (n)imv; (n+1)imv; (n+2)imv is a smaller part of the whole image generated by the camera unit400a, 400b, 400c. This aspect is illustrated in Figure 4a. According to an aspect each image view 1imv;2imv; (n)imv; (n+1)imv; (n+2)imv is determined by image processing of the image generated by the camera unit 400a, 400b. According to an aspect the camera unit 400a, 400b is a high resolution camera with a wide angle view. According to an aspect the size of each image view 1imv;2imv; (n)imv; (n+1)imv; (n+2)imv in comparison with the image generated by the camera unit 400a, 400b is controllable by input from the user. According to an aspect the size of each image view 1imv;2imv; (n)imv; (n+1)imv; (n+2)imv in comparison with the image generated by the camera unit 400a, 400b is set automatically by the monitoring system 100.

In one example the first position of the user Upos1, as illustrated in Figure 3a, corresponds to the position of the user in relation to the position of the display unit 200 as illustrated in Figure 3b. The determination of the image view results in this example with an image view that corresponds to the first image view 1imv that is illustrated in Figure 4a and figure 4b. In the same example, the second position of the user Upos2 as illustrated in Figure 3a corresponds to the position of the user in relation to the position of the display unit 200 as illustrated in Figure 3c. The determination of the image view results in the example with an image view that corresponds to the second image view 2imv that is illustrated in Figure 4a and Figure 4c.

Further movement of the user will result in further image views, e.g. as illustrated as the third image view 3imv and the fourth image view 4imv in Figure 4a.

In this example the second image view 2imv is also wider than the first image view 1imv. According to an aspect the processing circuitry 102 is configured to alter the pan and/or the zoom of the image view dependent on the position of the user Upos(n); Upos(n+1); Upos(n+2);... in relation to the position of the display unit 200. This means that the user can e.g. control zoom by moving the head more close to the display unit 200. In the illustrated example in Figure 4c, the second image view 2imv is wider due to a relative change in the distance between the user and the display unit 200.

According to an aspect the image views (n)imv;(n+1)imv are determined as to correspond to a view in a mirror to the user when looking at the display unit 200 and moving from the first position of the user Upos(n) to the second position of the user Upos(n+1). This means that it is very intuitive and easy for the user of the vehicle to control what information to be provided in the display unit since the display of image views corresponds to viewing objects in an ordinary mirror. A user does not need to operate a separate user interface in order to provide a better view of e.g. the surroundings behind the vehicle. According to one aspect the monitoring system automatically functions as an ordinary mirror to the user. The user experience of the user hence is the same as if the user is looking into an ordinary mirror.

According to an aspect the processing circuitry 102 is configured to cause the monitoring system 100 to continuously detect the position of the user Upos(n); Upos(n+1); Upos(n+2);....in relation to the position of the display unit and correspondingly continuously change between the image views ((n)imv; (n+1)imv; (n+2)imv;....). In other words, the different image views can be provided continuously to the user of the vehicle dependent on the position of the user in relation to the display unit.

According to an aspect the processing circuitry 102 is further configured to cause the monitoring system 100 to continuously detect, by the user detection unit 300, further positions of the user Upos(n); Upos(n+1); Upos(n+2);.... in relation to the position of the display unit 200 and determine, based on the further positions of the user Upos(n); Upos(n+1); Upos(n+2);.... in relation to the position of the display unit 200, further image views (n)imv; (n+1)imv; (n+2)imv;..... The processing circuitry 102 is then further configured to cause the monitoring system 100 to display the further image views (n)imv; (n+1)imv; (n+2)imv;.... in the display unit 200. In other words, plural image views can be provided to the user dependent on how the user is moving in relation to the display unit.

According to an aspect the camera unit 400a, 400b of the monitoring system is arranged to film a surrounding of the vehicle and determine the image views (n)imv;(n+1)imv from the film. This means that the film comprises information of the surrounding and with this information multiple different image views can be provided to the user. According to an aspect the monitoring system is arranged to film the surrounding in a rear view of the vehicle. This will help the user to see blind spots and dead angles that are normally not possible to see in a traditional rear view mirror, and hence provide with a better and more secure viewing of the rear view of the vehicle.

According to an aspect the display unit 200 comprise a mirror display. According to an aspect the display unit 200 is a mirror display 200 that is arranged to operate in a display mode, where the mirror display 200 is a screen for viewing images, and in a mirror mode, where the mirror display 200 is a mirror. In other words the display unit 200 can functions as an ordinary display, or alternate to function as an ordinary mirror. The mirror display 200 comprise according to an aspect a build-in LCD display that is displaying images from the camera unit 400a, 400b that has a mirror glass mounted in front of the LCD display. The effect is that when the LCD-display is on and displays images, the mirror glass is transparent to the driver but when the LDC-display is turned off, and un-lit, the mirror glass in front of the LCD-display appears as a normal mirror for the driver. This means that when e.g. power supply is turned off to the LCD-display, the mirror display functions as a normal mirror. In one aspect with the possibility to shift operation between mirror mode and display mode is that the driver can at any time manually or automatically turn off the LCD-display to enter normal mirror mode for a safety reason, so that the driver e.g. can observe the traffic in the mirror mode.

The illustration in Fig. 2a is an example view of mirror mode, which hence is the similar view of an ordinary mirror according to prior art, and the illustration in Fig. 4b and Figure 4c are an example views of display mode. The use of a mirror display has the advantage that when the display unit can be turned off and the user can then see an ordinary mirror view on the same surface as the display unit.

According to an aspect the image view 1imv;2imv; (n)imv; (n+1)imv; (n+2)imv is an image from a video stream of plural images. In other words, plural images, e.g. a number of images per second, is continuously streamed and the experience for the user is the same natural motion as same when looking in an ordinary mirror. Typically a video stream with 30 frames per second can be used in order for the user to get the experience as if the user is looking in an ordinary mirror. According to an aspect each frame of the video stream comprising an image view 1imv;2imv; (n)imv; (n+1)imv; (n+2)imv.

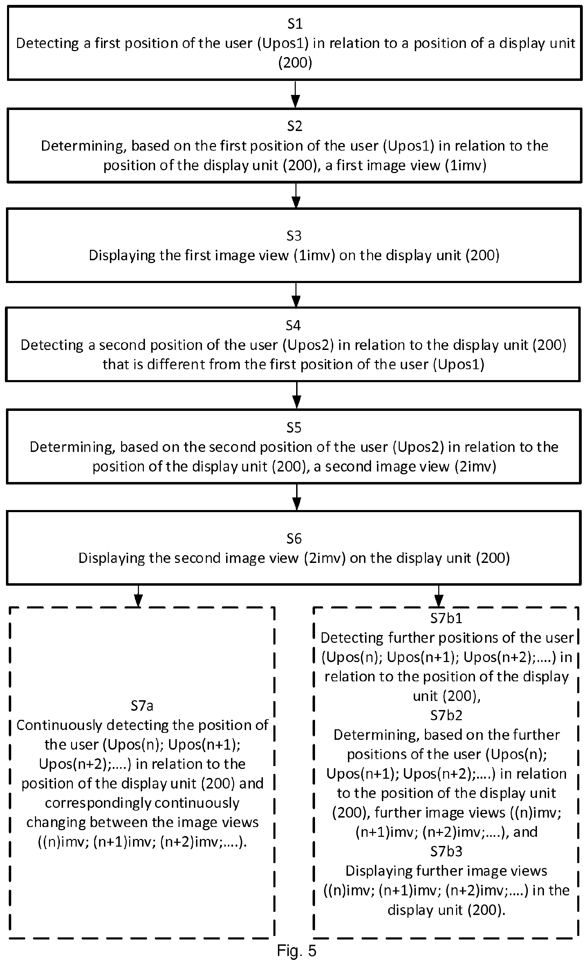

With reference to Figure 5 the disclosure further proposes a method. The monitoring system 100 is adapted for carrying out the method. Aspects of the monitoring system 100 described above can be carried out by the method described below.

The disclosure further proposes a method for displaying image views on a display unit 200 to a user of a vehicle. The method comprising the steps of; S1 detecting a first position of the user Upos1 in relation to a position of a display unit 200; S2 determining, based on the first position of the user Upos1 in relation to the position of the display unit 200, a first image view 1imv; and S3 displaying the first image view 1imv on the display unit 200. The method further comprising the steps of S4 detecting a second position of the user Upos2 in relation to the display unit 200 that is different from the first position of the user Upos1; S5 determining, based on the second position of the user Upos2 in relation to the position of the display unit 200, a second image view 2imv, and S6 displaying the second image view 2imv on the display unit 200. An advantage with the monitoring system is that different image views can be provided to the user of the vehicle when the user is moving from one position to another position. This is a very intuitive way for the user to change image view of the rear view in order to get better viewing angles and see more information that can be provided by the camera unit compare to a traditional rear view mirror.

According to an aspect the method further comprising: S7b1 detecting further positions of the user Upos(n); Upos(n+1); Upos(n+2);.... in relation to the position of the display unit 200; S7b2 determining, based on the further positions of the user Upos(n); Upos(n+1); Upos(n+2);.... in relation to the position of the display unit 200, further image views ((n)imv; (n+1)imv; (n+2)imv;....); and S7b3 displaying further image views (n)imv; (n+1)imv; (n+2)imv;.... in the display unit 200. In other words, the different image views can be provided continuously to the user of the vehicle dependent on the position of the user in relation to the display unit.

According to an aspect the method further comprising filming a surrounding of the vehicle and determining the image views (n)imv;(n+1)imv from the film. This means that the film comprises information of the surrounding and with this information multiple different image views can be provided to the user.

According to an aspect the method further comprising filming the surrounding in a rear view of the vehicle. This means that the film comprises information of the surrounding and with this information multiple different image views can be provided to the user.

According to an aspect the method further comprising S7a continuously detecting the position of the user in relation to the position of the display unit and correspondingly continuously changing between the image views. In other words, the different image views can be provided continuously to the user of the vehicle dependent on the position of the user in relation to the display unit.

According to an aspect the image views (n)imv;(n+1)imv are determined as to correspond to a view in a mirror to the user when looking at the display unit 200 and moving from the first position of the user Upos(n)) to the second position of the user Upos(n+1). This means that it is very intuitive and easy for the user of the vehicle to control what information to be provided in the display unit since the display of image views corresponds to viewing objects in an ordinary mirror.

According to an aspect the position of the user is defined by the position of the user's head. The movement of the head is hence used for determining the image views to be displayed via de display unit 200.

According to an aspect the processing circuitry 102 is configured to alter the pan and/or zoom of the image view dependent on the position of the user Upos(n); Upos(n+1); Upos(n+2);.... in relation to the position of the display unit 200. This means that the user can e.g. control zoom by moving the head more close to the display unit 200.

According to an aspect of the disclosure, the method is carried out by instructions in a software program that is downloaded and run in the display system.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A monitoring system (100) for displaying one or more image views to a user of a vehicle, the monitoring system (100) comprise:
• a display unit (200) configured to display the one or more image views to the user,
• a user detection unit (300) configured to detect a position of the user,
• a camera unit (400a, 400b) configured to provide the display unit (200) with the one or more image views, and
• a processing circuitry (102) connected to the display unit (200), the user detection unit (300) and the camera unit (400a, 400b) and configured to cause the monitoring system (100) to:
- detect, by the user detection unit (300), a first position of the user (Upos1) in relation to the position of the display unit (200),
- determine, based on the first position of the user (Upos1) in relation to the position of the display unit (200), a first image view (1imv),
- display the first image view (1imv) on the display unit (200),
- detect, by the user detection unit (300), a second position of the user (Upos2) in relation to the display unit (200) that is different from the first position of the user (Upos1),
- determine, based on the second position of the user (Upos2) in relation to the position of the display unit (200), a second image view (2imv), and
- display the second image view (2imv) on the display unit (200).

2. The monitoring system (100) according to claim 1, wherein the processing circuitry (102) is further configured to cause the monitoring system (100) to continuously:
- detect, by the user detection unit (300), further positions of the user (Upos(n); Upos(n+1); Upos(n+2);....) in relation to the position of the display unit (200),
- determine, based on the further positions of the user (Upos(n); Upos(n+1); Upos(n+2);....) in relation to the position of the display unit (200), further image views ((n)imv; (n+1)imv; (n+2)imv;....), and
- display the further image views ((n)imv; (n+1)imv; (n+2)imv;....) in the display unit (200).

3. The monitoring system (100) according to any of the preceding claims, wherein the camera unit (400a, 400b) is arranged to film a surrounding of the vehicle and determine the image views ((n)imv;(n+1)imv) from the film.

4. The monitoring system (100) according to claim 3, wherein the camera unit (400a, 400b) is arranged to film the surrounding in a rear view of the vehicle.

5. The monitoring system (100) according to any of the preceding claims, wherein the processing circuitry (102) is configured to cause the monitoring system (100) to continuously detect the position of the user (Upos(n); Upos(n+1); Upos(n+2);....) in relation to the position of the display unit and correspondingly continuously change between the image views((n)imv; (n+1)imv; (n+2)imv;....).

6. The monitoring system (100) according to any of the preceding claims, wherein the image views ((n)imv;(n+1)imv) are determined as to correspond to a view in a mirror to the user when looking at the display unit (200) and moving from the first position of the user (Upos(n)) to the second position of the user (Upos(n+1)).

7. The monitoring system (100) according to any of the preceding claims, wherein the position of the user is defined by the position of the user's head.

8. The monitoring system (100) according to any of the preceding claims, wherein the user detection unit (300) comprises at least one of
- a head or face detection sensor;
- an eye tracking sensor;
- a camera sensor;
- an infra-red sensor;
- a radar sensor; and
- a laser sensor

9. A method for displaying image views on a display unit (200) to a user of a vehicle, the method comprising:
- (S1) detecting a first position of the user (Upos1) in relation to a position of a display unit (200),
- (S2) determining, based on the first position of the user (Upos1) in relation to the position of the display unit (200), a first image view (1imv)
- (S3) displaying the first image view (1imv) on the display unit (200),
- (S4) detecting a second position of the user (Upos2) in relation to the display unit (200) that is different from the first position of the user (Upos1),
- (S5) determining, based on the second position of the user (Upos2) in relation to the position of the display unit (200), a second image view (2imv), and
- (S6) displaying the second image view (2imv) on the display unit (200)

10. The method according to claim 9 further comprising:
- (S7b1) detecting further positions of the user (Upos(n); Upos(n+1); Upos(n+2);....) in relation to the position of the display unit (200),
- (S7b2) determining, based on the further positions of the user (Upos(n); Upos(n+1); Upos(n+2);....) in relation to the position of the display unit (200), further image views ((n)imv; (n+1)imv; (n+2)imv;....), and
- (S7b3) displaying further image views ((n)imv; (n+1)imv; (n+2)imv;....) in the display unit (200).

11. The method according to any of claims 9 or 10, further comprising filming a surrounding of the vehicle and determining the image views ((n)imv;(n+1)imv) from the film.

12. The method according to claim 11, further comprising filming the surrounding in a rear view of the vehicle.

13. The method according to any of claims 9 to 12, further comprising (S7a) continuously detecting the position of the user in relation to the position of the display unit and correspondingly continuously changing between the image views ((n)imv;(n+1)imv).

14. The method according to any of claims 9 to 13, wherein the image views ((n)imv;(n+1)imv) are determined as to correspond to a view in a mirror to the user when looking at the display unit (200) and moving from the first position of the user (Upos(n)) to the second position of the user (Upos(n+1)).

15. The method according to any of claims 9 to 14, wherein the position of the user is defined by the position of the user's head.
